(19) Europäisches Patentamt
European Patent Office
Office européen des brevets

(11) **EP 3 212 503 B1**

(12) **FASCICULE DE BREVET EUROPEEN**

(45) Date de publication et mention de la délivrance du brevet:
**22.11.2017 Bulletin 2017/47**

(51) Int Cl.:
***B64G 1/40*** *(2006.01)*      ***B64G 1/50*** *(2006.01)*
***B64G 1/64*** *(2006.01)*

(21) Numéro de dépôt: **16705226.5**

(22) Date de dépôt: **22.01.2016**

(86) Numéro de dépôt international:
**PCT/FR2016/050136**

(87) Numéro de publication internationale:
**WO 2016/120547 (04.08.2016 Gazette 2016/31)**

(54) **SATELLITE ARTIFICIEL ET PROCÉDÉ DE REMPLISSAGE D'UN RÉSERVOIR DE GAZ PROPULSIF DUDIT SATELLITE ARTIFICIEL**

KÜNSTLICHER SATELLIT UND VERFAHREN ZUM FÜLLEN EINES TANKS EINES TREIBGASES DES BESAGTEN KÜNSTLICHEN SATELLITEN

ARTIFICIAL SATELLITE AND METHOD FOR FILLING A TANK OF PROPELLENT GAS OF SAID ARTIFICIAL SATELLITE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.01.2015 FR 1550613**

(43) Date de publication de la demande:
**06.09.2017 Bulletin 2017/36**

(73) Titulaire: **Airbus Defence and Space SAS 78130 Les Mureaux (FR)**

(72) Inventeur: **WALKER, Andrew, Nicholas 31320 Pechbusque (FR)**

(74) Mandataire: **Cabinet Plasseraud 66, rue de la Chaussée d'Antin 75440 Paris Cedex 09 (FR)**

(56) Documents cités:
**WO-A1-2011/135230**     **US-A- 4 880 050 US-A- 5 310 141**

**Description**

L'invention concerne le domaine technique des satellites artificiels, et plus spécifiquement du dépointage des réflecteurs d'antenne et du stockage de gaz propulsif.

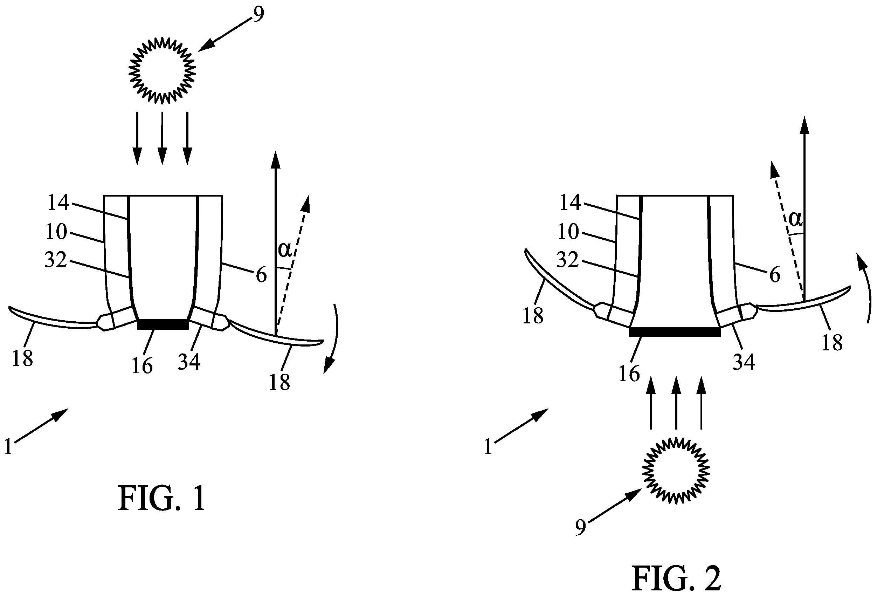

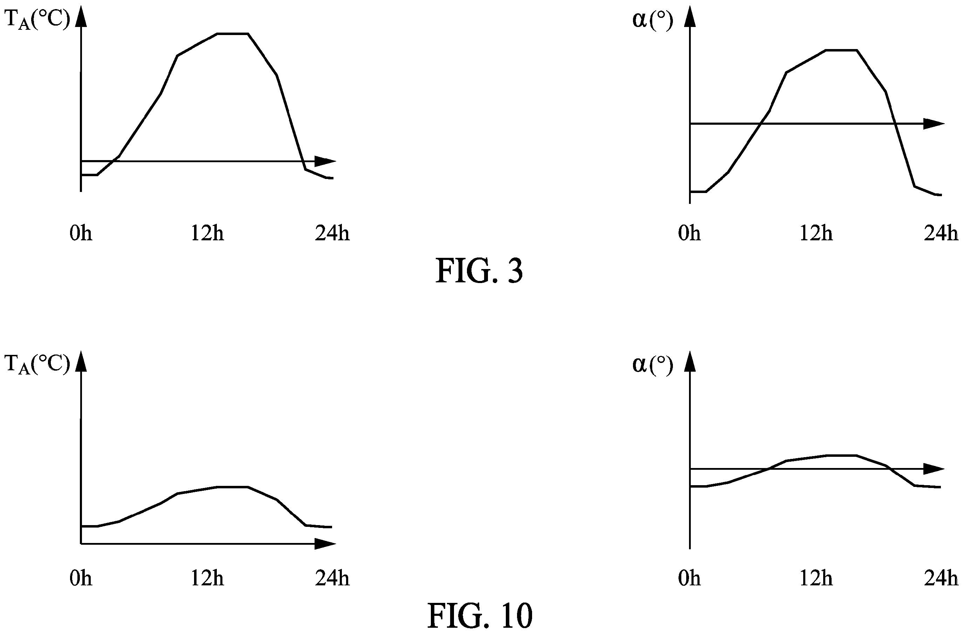

Les satellites artificiels connus 1, représentés schématiquement sur les figures 1, 2 et 4, sont généralement constitués par une structure-support 14 portant six murs plans porte-équipements 6, 10 formant une case à équipements cubique ou parallélépipédique. Des réflecteurs d'antenne 18 sont fixés à la base des murs plans porte-équipements 6, 10 ou directement sur la structure-support. Un adaptateur-lanceur 16 (communément appelé par le sigle LVA de l'anglais « Launch Vehicle Adaptor ») est fixé directement à la base de la structure-support 14. Cet adaptateur-lanceur est destiné à être solidarisé amoviblement à un adaptateur complémentaire solidaire d'un lanceur du satellite. L'adaptateur-lanceur 16 est libéré de l'adaptateur complémentaire du lanceur, lorsque le satellite est largué en fin de phase propulsive du lanceur.
Le document US 5,310,141 divulgue un adaptateur-lanceur classique.
La structure-support 14 doit à la fois être très légère et résister au lancement en supportant plusieurs g d'accélération statique. Elle est donc généralement réalisée en fibre de carbone. Ce matériau est très solide et présente un coefficient d'expansion thermique proche de zéro de sorte que la structure-support se déforme peu. Au contraire, l'adaptateur-lanceur 16 est réalisé en aluminium. Ce matériau est capable de résister à une charge locale importante lors du lancement. Mais, ce matériau présente un coefficient d'expansion thermique élevé. Or, en station, l'adaptateur -lanceur 16 subit périodiquement des variations de température pouvant atteindre 60 °C lors de ses passages successifs du côté du soleil 9 au côté nocturne. En conséquence, l'adaptateur-lanceur 16 se contracte à minuit en temps solaire local (Cf. Figure 1) et se dilate à midi en temps solaire local (Cf. Figure 2). Comme l'adaptateur-lanceur 16 est fixé directement sur la structure-support 14, ces dilatations et ces contractions occasionnent des déformations de la structure -support et de la base des murs plans porte-équipements 6, 8. Ces déformations causent des dépointages périodiques des réflecteurs d'antenne 18. La figure 3 représente la variation de la température $T_A$ de l'adaptateur-lanceur 16 au cours du temps ainsi que le dépointage $\alpha$ des réflecteurs d'antenne 18 en résultant.

Pour éviter ces dépointages, il est possible de fixer les réflecteurs d'antenne à une plus grande distance de l'adaptateur-lanceur, par exemple, sur une partie médiane des murs plans porte-équipements. Toutefois, ce positionnement réduit la distance focale des réflecteurs d'antenne. Cette réduction peut être contraignant pour leurs perfor-mances.

Pour éviter ces dépointages, certains constructeurs ont donc développé des mécanismes complexes de re-pointage des réflecteurs d'antenne. Ces mécanismes comportent des capteurs propres à capter les dépointages, une unité de traitement propre à calculer la nouvelle orientation à donner aux réflecteurs d'antenne et des actionneurs aptes à réorienter les réflecteurs d'antenne. Néanmoins, ces mécanismes de re-pointage ne sont pas totalement satisfaisants car ils ont des difficultés à capter les dépointages en raison de l'absence de référentiel fixe dans l'espace. De plus, ils sont très coûteux.

Le but de la présente invention est de proposer un satellite artificiel dont les réflecteurs d'antenne ne sont pas ou peu dépointés et qui ne présentent pas les désavantages des mécanismes existants.

Avantageusement, le satellite artificiel selon l'invention ne réduit pas la distance focale des réflecteurs d'antenne.

Avantageusement, le satellite artificiel selon l'invention est moins coûteux que les satellites munis d'un mécanisme de re-pointage et sont plus fiable sur la durée.

A cet effet, l'invention a pour objet un satellite artificiel ayant un axe longitudinal qui s'étend dans la direction de lancement, ledit satellite artificiel comportant :

- une structure-support portant des murs porte-équipements,
- un adaptateur-lanceur solidaire de la structure-support,
- un premier radiateur,
- au moins un premier équipement de transport de chaleur par fluide comportant au moins une première section d'échange thermique et une seconde section d'échange thermique, ladite seconde section d'échange thermique étant en contact thermique avec ledit premier radiateur, caractérisé en ce que ladite première section d'échange thermique est en contact thermique avec au moins une partie de l'adaptateur-lanceur de sorte à permettre des échanges thermiques entre l'adaptateur-lanceur et le premier radiateur.

Suivant des modes particuliers de réalisation, le satellite artificiel comporte l'une ou plusieurs des caractéristiques suivantes :

- il comporte un profilé solidaire de l'adaptateur-lanceur, ledit profilé s'étendant dans un plan perpendiculaire à l'axe longitudinal du satellite, et dans lequel ledit profilé porte et est en contact thermique direct avec au moins une partie de la première section d'échange thermique.

- Un mur porte-équipements, dit mur porte-équipements anti-terre, est fixé à l'adaptateur-lanceur par l'intermédiaire dudit profilé.
- Au moins une partie de la première section d'échange thermique est en contact thermique direct avec un mur porte-équipements, dit mur porte-équipements anti-terre; ledit mur porte-équipements anti-terre étant fixé à l'adaptateur-lanceur.
- Il comporte un profilé solidaire de l'adaptateur-lanceur, ledit profilé s'étendant dans un plan perpendiculaire à l'axe longitudinal du satellite.
- La première section d'échange thermique comprend plusieurs tronçons fixés les uns aux autres de manière à former un demi - polygone ou un polygone.
- La première section d'échange thermique présente la forme d'un demi-cercle ou la forme d'un cercle.
- Le premier équipement de transport de chaleur comprend une conduite principale en forme d'oméga et au moins une conduite auxiliaire en forme de L ; au moins une partie de la conduite principale formant ladite première section d'échange thermique, au moins une partie de la conduite auxiliaire formant ladite seconde section d'échange thermique.
- Il comporte un réservoir de gaz propulsif et dans lequel l'adaptateur-lanceur est un corps cylindrique; ledit réservoir de gaz propulsif étant agencé à l'intérieur dudit corps cylindrique ; ledit réservoir étant en contact thermique avec l'adaptateur-lanceur.
- Le réservoir est monté directement sur l'adaptateur-lanceur.
- Il comporte au moins un deuxième équipement de transport de chaleur par fluide ; ledit deuxième équipement de transport de chaleur comprenant une première section et une deuxième section ; ladite deuxième section étant en contact thermique avec ledit premier radiateur et ladite première section étant en contact thermique avec un ensemble d'accumulateurs électriques.
- Il comporte une bande adhésive réalisée dans un matériau thermiquement conducteur ; ladite bande adhésive étant solidarisée, d'une part, à la première section d'échange thermique et, d'autre part, à au moins une partie dudit profilé.
- La première section d'échange thermique comprend au moins deux caloducs disposés, l'un à côté de l'autre, le long d'une direction perpendiculaire à l'axe longitudinal du satellite.
- La première section d'échange thermique comprend au moins deux caloducs disposés l'un à côté de l'autre, le long d'une direction parallèle à l'axe longitudinal du satellite.
- Le premier équipement de transfert de chaleur comporte au moins une chaufferette en contact thermique avec la seconde section d'échange thermique, et une unité de commande propre à commander l'allumage de ladite au moins une chaufferette.

Avant lancement, le réservoir du satellite doit être rempli avec du propergol. Lorsque le propergol est un gaz tel que le xénon, l'opération de remplissage du réservoir entraîne une augmentation de la pression du gaz dans le réservoir. L'augmentation de cette pression entraîne l'augmentation de la température du gaz et du réservoir. En conséquence, il est nécessaire de limiter la vitesse de remplissage. Ainsi, à chaque fois qu'une petite quantité de gaz est introduite dans le réservoir, il est nécessaire d'attendre le refroidissement du réservoir à une température ambiante avant de pouvoir introduire à nouveau une petite quantité de gaz. Ce procédé doit être répété plusieurs fois pour remplir en totalité le réservoir. La durée de refroidissement du réservoir est donc importante. Le réservoir est généralement installé à l'intérieur du satellite et est isolé thermiquement de l'extérieur. En conséquence, le refroidissement du réservoir est extrêmement lent de sorte que le procédé de remplissage du réservoir peut prendre plusieurs jours. Pour diminuer la durée de ce remplissage, il est possible d'insuffler de l'air frais à l'intérieur du satellite pour aider au refroidissement du réservoir. Toutefois, l'introduction d'air frais provenant d'un système de ventilation peut amener des particules et des contaminants à l'intérieur du satellite.

L'invention a également pour objet un procédé de remplissage d'un réservoir du satellite artificiel mentionné ci-dessus. Ce procédé comporte les étapes suivantes :

- refroidissement du réservoir par le premier radiateur ; et
- remplissage du réservoir par du propergol.

Avantageusement, selon l'invention, il existe un couplage thermique important entre le réservoir et le radiateur. En conséquence, il est à présent possible de refroidir le réservoir en amenant de l'air froid dans les radiateurs extérieurs. Ainsi aucun contaminant n'est introduit à l'intérieur du satellite. La durée de remplissage du réservoir peut être réduite de façon importante. Au cours de ce procédé de remplissage du réservoir, les chaufferettes seront bien entendu éteintes.

L'invention sera mieux comprise à la lecture de la description qui va suivre, donnée uniquement à titre d'exemple et faite en se référant aux figures sur lesquelles :

- la figure 1 est une vue schématique d'un satellite artificiel selon l'état de la technique lorsque l'adaptateur-lanceur est positionné du côté nocturne ;

- la figure 2 est une vue schématique d'un satellite artificiel selon l'état de la technique lorsque l'adaptateur-lanceur est positionné du côté du soleil ;
- la figure 3 est deux courbes représentant, l'une la température de l'adaptateur-lanceur d'un satellite de l'état de la technique en fonction du temps, l'autre, le dépointage de ces réflecteurs d'antenne en fonction du temps ;
- la figure 4 est une vue en perspective éclatée d'un satellite artificiel selon un premier mode de réalisation de l'invention ;
- la figure 5 est une vue en coupe de dessus, d'une partie inférieure du satellite artificiel illustré sur la figure 4 ;
- la figure 6 est une section du satellite artificiel illustré sur la figure 4, le plan de section étant illustré sur la figure 5;
- la figure 7 est section similaire à la vue de la figure 6 d'une variante de réalisation du satellite artificiel illustré sur la figure 4 ;
- la figure 8 est une vue en coupe similaire à la figure 5 d'un deuxième mode de réalisation du satellite artificiel selon l'invention ;
- la figure 9 est une vue en perspective représentant une partie d'un troisième mode de réalisation du satellite artificiel selon l'invention ;
- la figure 10 est deux courbes représentant, l'une la température de l'adaptateur-lanceur 16 d'un satellite selon l'invention en fonction du temps, l'autre le dépointage des réflecteurs d'antenne en fonction du temps ;

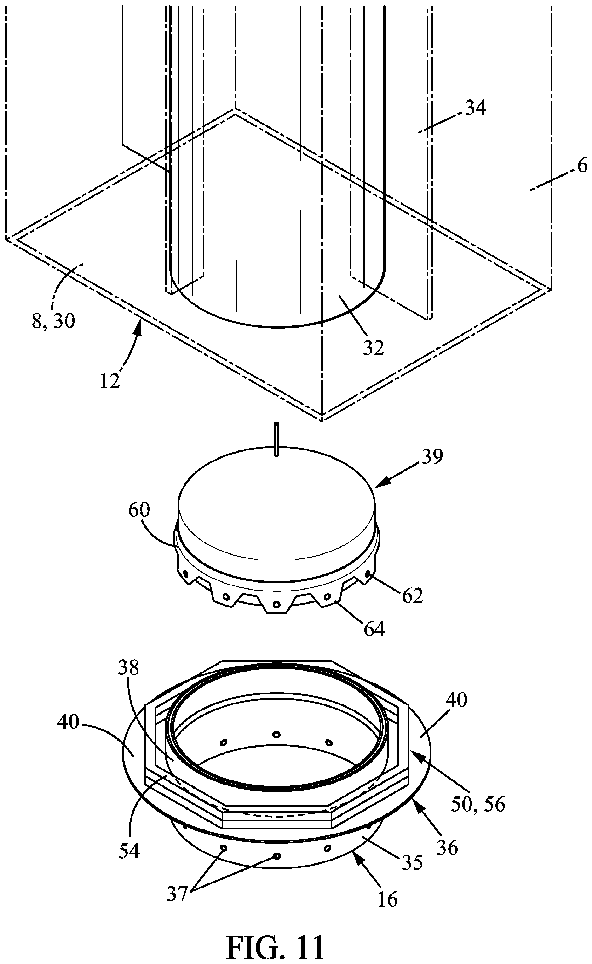

- la figure 11 est une vue en perspective éclatée d'un quatrième mode de réalisation du satellite artificiel selon l'invention dans lequel un réservoir est monté ; et
- la figure 12 est un diagramme représentant les étapes du procédé selon l'invention.

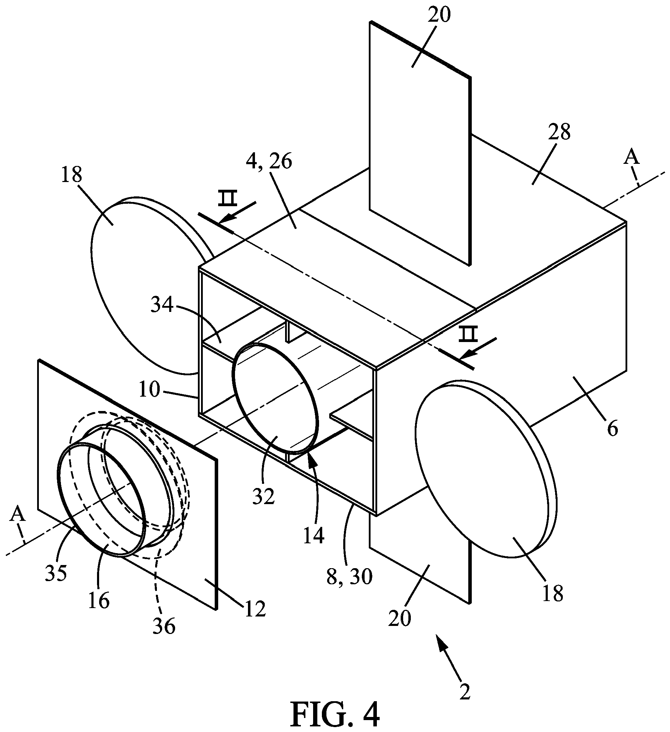

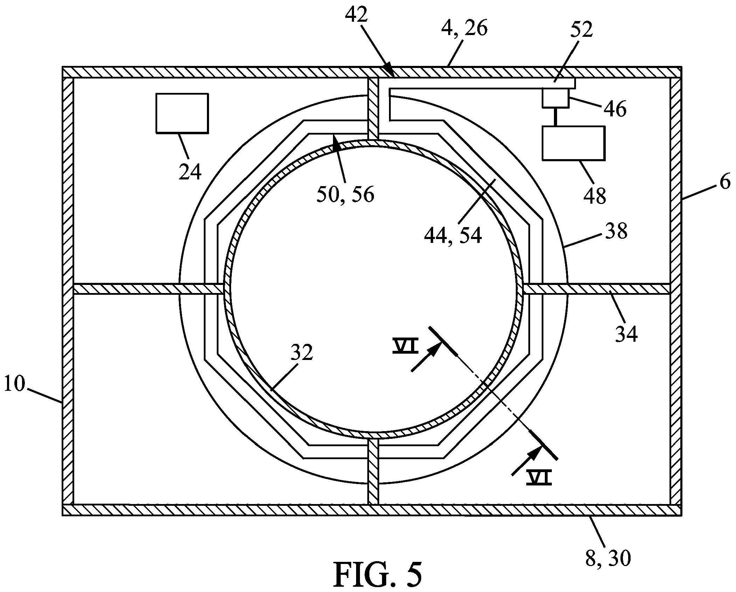

En référence aux figures 4 et 5, un satellite artificiel 2 selon le premier mode de réalisation de l'invention a un axe longitudinal A-A qui s'étend dans la direction de lancement. Il comprend des murs plans porte-équipements 4, 6, 8, 10, 12 propres à porter des équipements, une structure-support 14 portant lesdits murs porte-équipements et un adaptateur-lanceur 16 solidaire de la structure-support 14.

Les équipements comprennent notamment des réflecteurs d'antenne 18, des équipements électroniques (non représentés), alimentés par des panneaux solaires 20 et au moins un ensemble d'accumulateurs électriques 24.

Les réflecteurs d'antenne 18 sont fixés à la base des murs porte-équipements 6, 10 des faces Est et Ouest. Des panneaux solaires 20 sont montés sur les murs porte-équipements des faces Nord 4 et Sud 8. Le mur porte-équipements de la face Nord 4 est muni d'un premier radiateur 26 et d'un deuxième radiateur 28. Le mur porte-équipements de la face Sud 8 est équipé d'un troisième radiateur 30.

La structure-support 14 et l'adaptateur-lanceur 16 peuvent être constitués de différentes façons. Seul un exemple de constitution représenté sur la figure 4 sera décrit de manière détaillée. L'exemple de structure-support représenté sur la figure 4, comporte un cylindre central 32 et quatre ailettes 34 fixées, chacune, d'une part, au cylindre central 32, et d'autre part à un mur porte-équipements 4, 6, 8, 10.

L'exemple d'adaptateur-lanceur 16 représenté sur les figures 4 à 7 présente la forme d'une bague. Il est constitué par un corps cylindrique 35 ayant une base circulaire. Le centre de la base circulaire est disposé sur l'axe longitudinal A-A du satellite. Le corps cylindrique 35 est solidarisé à la partie inférieure du cylindre central 32 de la structure-support.

Le mur porte-équipements 12 qui s'étend perpendiculairement à l'axe longitudinal A-A du côté du lanceur, dit mur porte-équipements anti-terre 12, est fixé à l'adaptateur-lanceur 16 et au cylindre central 32, par l'intermédiaire d'un profilé 36 représenté schématiquement sur les figures 4, 7, 8 et 9. Le profilé 36 a une section en forme d'équerre. Cette équerre présente une première branche 38 fixée à l'adaptateur-lanceur et au cylindre central et une seconde branche 40 fixée au mur porte-équipements anti-terre 12, par exemple par des boulons. La première branche 38 enserre l'adaptateur-lanceur 16. La seconde branche 40 forme une collerette qui s'étend vers l'extérieur dans un plan perpendiculaire à l'axe longitudinal A-A du satellite.

L'adaptateur-lanceur est généralement réalisé en aluminium ou dans un alliage à base d'aluminium. La structure-support 14 est généralement réalisée en fibre de carbone.

En référence à la figure 5, le satellite artificiel 2 comporte un premier équipement 42 de transport de chaleur par fluide propre à refroidir ou à réchauffer l'adaptateur-lanceur 16 pour atténuer les variations de température auxquelles celui-ci est soumis.

Le premier équipement 42 de transport de chaleur par fluide est un équipement diphasique tel qu'un caloduc. Il forme une boucle d'échange thermique. Il comporte une conduite 44 contenant un fluide caloporteur ou plusieurs conduites 44, 45 contenant des fluides caloporteurs, lesdites conduites étant en contact thermique deux à deux. Il comporte également une chaufferette 46 et une unité de commande 48 propre à commander l'allumage de la chaufferette.

La conduite 44 comprend une première section de conduite 50 d'échange thermique en contact thermique avec l'adaptateur-lanceur 16 et une seconde section de conduite 52 d'échange thermique.

La première section d'échange thermique 50 est constitué par plusieurs tronçons de conduite rectilignes 54 fixés les uns aux autres de manière à former un polygone 56. Ce polygone 56 est disposé le plus proche possible de l'adaptateur lanceur 16.

La seconde section d'échange thermique 52 est en contact thermique d'une part, avec le premier radiateur 26, et d'autre part, avec la chaufferette 46. Le premier radiateur 26 constitue un puits thermique ou source froide. La chaufferette 46 constitue une source chaude. La chaufferette peut par exemple être localisée sur la face interne du radiateur, sur les conduites, ou directement au niveau de l'adaptateur. L'ensemble premier radiateur -chaufferette constitue donc une source thermique froide ou chaude.

Avantageusement, la seconde section d'échange thermique 52 est fixée sur une face du satellite ayant une orientation différente de l'orientation de la face qui porte l'adaptateur-lanceur. En conséquence, la seconde section d'échange thermique 50 n'est généralement pas exposée au même moment, au même ensoleillement que l'adaptateur-lanceur.

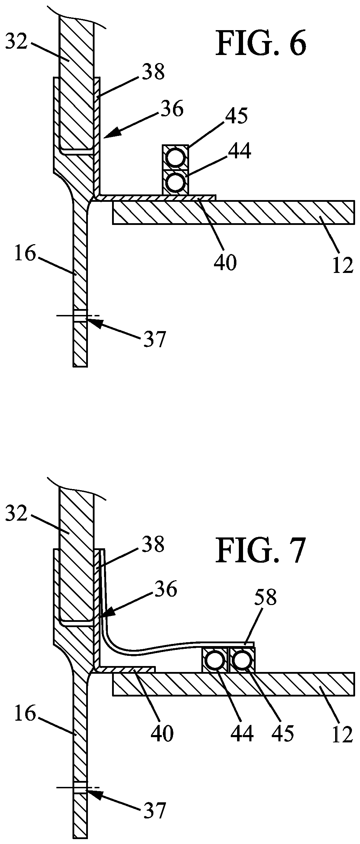

Les figures 6 et 7 illustrent deux modes d'agencement possibles de la première section d'échange thermique 50.

En référence à la figure 6, la première section d'échange thermique 50 est constituée par deux conduites 44, 45 et, en particulier, par deux caloducs. Les deux caloducs 44, 45 sont empilés l'un au-dessus de l'autre, le long d'une direction parallèle à l'axe longitudinal A-A du satellite. Le caloduc inférieur 44 est en contact physique direct avec le profilé 36.

En référence à la figure 7, la première section d'échange thermique 50 est constituée par deux conduites 44, 45 et, en particulier, par deux caloducs. Les deux caloducs 44, 45 sont agencés l'un à côté de l'autre, le long d'une direction perpendiculaire à l'axe longitudinal A-A du satellite. Dans ce second mode d'agencement, les deux caloducs 44, 45 sont en contact physique direct avec le mur porte-équipements-terre 12.

Préférentiellement, une bande adhésive thermique 58 (en anglais « thermal strap »), réalisée dans un matériau thermiquement conducteur, tel que de l'aluminium ou un alliage d'aluminium, est disposée sur les deux caloducs 44, 45 et sur la première branche 38 du profilé. Elle réalise un pont thermique entre ceux-ci. Elle améliore la conduction de chaleur entre la première section d'échange de chaleur 50 et l'adaptateur-lanceur 16.

Le premier équipement 42 de transport de chaleur est utilisé pour refroidir ou réchauffer l'adaptateur-lanceur 16, soit de manière passive en utilisant l'orientation « naturelle » du satellite artificiel 2 par rapport au soleil, et en particulier l'orientation de l'adaptateur-lanceur 16 et du premier radiateur 26 par rapport au soleil, soit de manière active, par exemple en utilisant la chaufferette 46.

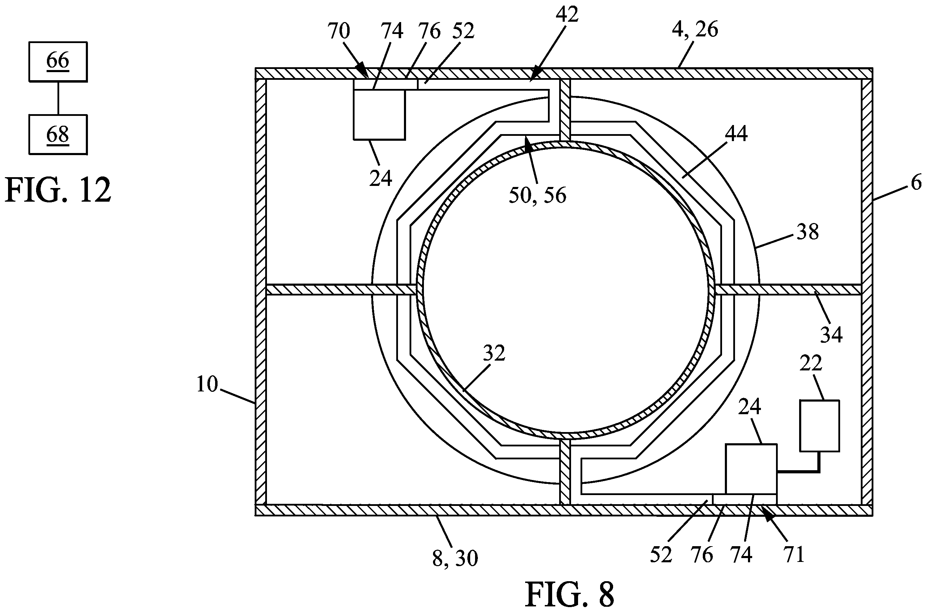

Selon un second mode de réalisation de l'invention représenté sur la figure 8, le satellite artificiel 2 comporte en outre un deuxième 70 et un troisième 71 équipements de transport de chaleur 70, chacun, propre à refroidir un ensemble d'accumulateurs électriques 24, lors de leur fonctionnement.

Le deuxième 70 et le troisième 71 équipements de transport de chaleur comprennent, chacun, une conduite ayant une première section 74 et une deuxième section 76. La deuxième section du deuxième équipement de transport de chaleur est en contact thermique avec le premier radiateur 26. La deuxième section 76 du troisième équipement de transport de chaleur est en contact thermique avec le troisième radiateur 30.

Le satellite artificiel 2 illustré sur la figure 8 comprend les mêmes éléments techniques que le satellite artificiel 2 représenté sur les autres figures. Ces élément techniques ont été référencés par les mêmes références numériques et n'ont pas décrits une seconde fois. La chaufferette 46 et l'unité de commande 48 n'ont pas été représentées sur la figure 8 pour des raisons de simplification.

Le mode de réalisation de la figure 8 permet d'utiliser le premier radiateur 26 et le troisième radiateur 30 pour refroidir à la fois l'ensemble adaptateur-lanceur 16/ réservoir 39 et deux ensembles d'accumulateurs électriques 24.

Cette configuration est avantageuse notamment pour certains satellites de télécommunication ayant un adaptateur-lanceur 16 orienté anti-terre. En effet, l'adaptateur-lanceur 16 de ces satellites est exposé à un maximum d'ensoleillement à mi-journée en temps solaire local. Et comme les ensembles d'accumulateurs électriques 24 ne dissipent de la chaleur que lorsqu'ils sont utilisés c'est-à-dire lorsque le satellite est en éclipse, à minuit en temps solaire local, le même radiateur 26, 30 peut dissiper la chaleur des ensembles accumulateurs électriques à minuit et la chaleur de l'adaptateur-lanceur 16 à mi-journée. Ainsi, un seul radiateur 26, 30 peut être utilisé pour deux fonctions : le refroidissement des ensembles accumulateurs électriques et le refroidissement de l'adaptateur -lanceur. Les besoins en réchauffage sont également réduits. La chaufferette peut être commune pour le contrôle de l'adaptateur lanceur et des accumulateurs. Cette configuration est également avantageuse pour les satellites artificiels 2 ayant un adaptateur-lanceur 16 disposé en regard de l'est ou de l'ouest.

Avantageusement, cette configuration permet d'augmenter les performances des radiateurs en réalisant un lien thermique Nord-Sud entre le premier radiateur 26 et le troisième radiateur 30.

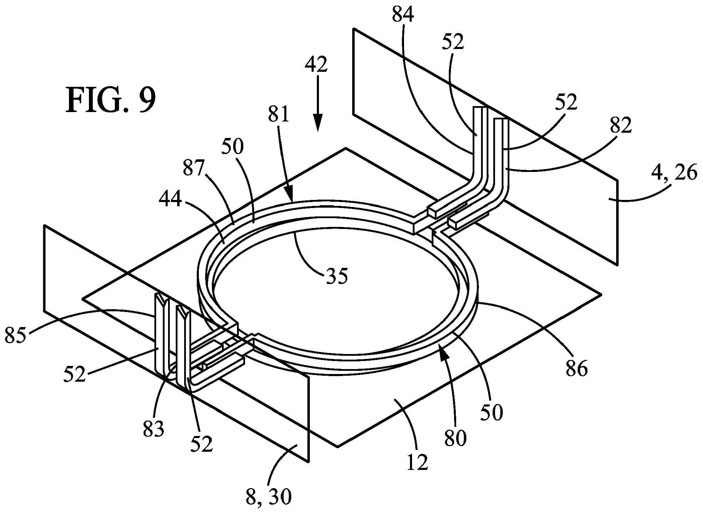

Selon un troisième mode de réalisation du satellite artificiel 2 selon l'invention, représenté sur la figure 9, le premier équipement de transport de chaleur 42 comprend deux conduites principales 80, 81 en forme d'oméga et quatre conduites auxiliaires 82, 83, 84, 85 en forme de L.

La forme en oméga est constituée par un demi-cercle relié à deux branches linéaires. Le demi-cercle 86 d'une conduite principale 80 est en contact thermique avec une partie semi-cylindrique de l'adaptateur-lanceur 16. Une première conduite auxiliaire 82 est en contact thermique avec une branche linéaire de la conduite principale 80 et avec le premier radiateur 26. Une seconde conduite auxiliaire 83 est en contact thermique avec l'autre branche linéaire de la conduite principale 80 et avec le troisième radiateur 30.

Le demi-cercle 87 de l'autre conduite principale 81 est en contact thermique avec une partie semi-cylindrique complémentaire de l'adaptateur-lanceur 16. Une troisième conduite auxiliaire 84 est en contact thermique avec une branche linéaire de la conduite principale 81 et avec le premier radiateur 26. Une quatrième conduite auxiliaire 85 est en contact thermique avec l'autre branche linéaire de la conduite principale 81 et avec le troisième radiateur 30.

Les demi-cercles 86, 87 sont disposées sur le profilé 36 ou sur le mur porte-équipements anti-terre 12. Ils sont en contact thermique avec l'adaptateur-lanceur 16. Ils constituent la première section d'échange thermique 50. Une partie de chaque conduite auxiliaire 82, 83, 84, 84 constitue la seconde section d'échange thermique 52.

En variante, les demi-cercles 86, 87 sont remplacés par des demi-polygones.

En variante, la conduite principale en forme d'oméga (ou de demi-polygône) est réalisée d'un seul tenant c'est-à-dire à l'aide d'une unique conduite. Cette variante est avantageuse pour l'intégration puisqu'elle n'implique que 3 pièces planes ce qui facilite leur intégration.

Dans ce mode de réalisation, il y a un lien thermique nord-sud entre le premier radiateur 26 et le troisième radiateur 30, ce qui est avantageux en terme de performance de radiateur. Ce mode de réalisation peut-être facilement combiné au mode de réalisation précédent : le premier radiateur 26 et le troisième radiateur 30 pouvant être commun avec le radiateur des batteries.

En fonctionnement, lorsque l'adaptateur-lanceur 16 est orienté vers le soleil à 12h00 en temps solaire local, l'adaptateur-lanceur 16 est une source chaude pour le premier équipement de transport de chaleur 42. La chaleur récupérée par la première section d'échange thermique 50 est évacuée par le premier radiateur 26 qui est en contact thermique avec la seconde section d'échange thermique 52. Le premier radiateur 26 refroidit l'adaptateur-lanceur 16. Au contraire, lorsque l'adaptateur-lanceur 16 est orienté du côté ombre, à 0h00 en temps solaire local, l'adaptateur-lanceur 16 est réchauffé par la chaufferette 46 via le premier équipement de transport de chaleur 42. Ainsi, le premier équipement de transport de chaleur 42 permet de refroidir l'adaptateur-lanceur 16, lorsque celui-ci présente une température élevée, et de le réchauffer, lorsqu'il présente une température basse. Ainsi, comme le montre la figure 10, la plage de variation de température de l'adaptateur-lanceur 16 est réduite de sorte que l'adaptateur-lanceur ne se déforme pas ou peu. Les dépointages α des réflecteurs d'antenne 18 sont ainsi amoindris, voire supprimés.

Un exemple de valeur d'échange thermique entre l'adaptateur-lanceur et le premier radiateur peut être estimé par le calcul décrit ci-après.

L'objectif est, par exemple, de limiter les variations de température de l'adaptateur-lanceur à 20°C +/- 10°C. Ainsi, la température maximale de l'adaptateur-lanceur ne doit pas être supérieure à 30°C (303 K) lorsque l'adaptateur-lanceur est au soleil, et ne doit pas être inférieure à 10°C (283 K) lorsque l'adaptateur-lanceur est dans l'ombre. La partie exposée du corps cylindrique 35 peut être assimilée à un anneau de 1,66 mètre de diamètre extérieur et de 1.56 mètre de diamètre intérieur. La surface exposée au soleil (Surf.) est égale à 0,254 m². Le revêtement de surface est généralement un revêtement dur, par exemple un revêtement anodisation dur tel que de la marque alocrom, avec une absorptivité solaire (αs) environ égale à 0,5 et une émissivité infra-rouge (εIR) environ égale à 0,1. Lorsque l'adaptateur-lanceur est exposé au soleil, il absorbe la chaleur $Q_{sol}$.

$$Q_{sol} = F_{sol} \times \alpha s \times \text{Surf.}$$

$$Q_{sol} = 1{,}427 \ \text{W/m}^2 \times 0{,}5 \times 0{,}254 \text{m}^2 = 181 \ \text{W}.$$

Dans laquelle $F_{sol}$ est le flux solaire moyen.

Une partie $Q_{rad}$ de cette chaleur $Q_{sol}$ est directement rayonnée dans l'espace $Q_{rad}$.

$$Q_{rad} = \varepsilon IR \times \text{Surf.} \times \sigma \times T^4$$

$$Q_{rad} = \ = 12 \ \text{W}.$$

Dans laquelle σ est la constante de Stefan-Boltzmann

Et T est la température

La quantité de chaleur de chaleur à évacuer par le système de caloduc est alors $Q_{sol} - Q_{rad} = 169$ W. Lorsque l'adaptateur lanceur est dans l'ombre, la quantité de chaleur provenant du soleil et absorbée par l'adaptateur-lanceur est nulle, le corps cylindrique 35 irradie moins d'énergie vers l'espace (car la température est plus basse). Dans ce cas,

$$Q_{rad} = = \varepsilon IR \times Surf. \times \sigma \times T^4$$

$$Q_{rad} = 9W.$$

L'ensemble premier radiateur 26 et chaufferette peut être contrôlé à une température constante de typiquement 13 °C. Le premier radiateur est dimensionné pour rejeter la quantité de chaleur lorsque l'adaptateur-lanceur est totalement exposé au soleil, l'unité de commande et la chaufferette peuvent être ensuite mises en oeuvre afin de fournir progressivement de la chaleur au fur et à mesure que l'adaptateur-lanceur passe dans l'ombre.

Dans ce cas, la différence de température entre l'adaptateur-lanceur et le premier radiateur est de 17 °C lorsque l'adaptateur-lanceur est totalement exposé aux rayonnements solaires, et de -3 °C lorsque l'adaptateur-lanceur est situé à l'ombre.

Le couplage thermique minimal requis est ensuite déterminé par la quantité de chaleur de chaleur à évacuer divisée par le gradient de température. Lorsque l'adaptateur-lanceur est exposé en plein soleil, le couplage thermique est de -169W/17°C = 10 W/K. Lorsque l'adaptateur-lanceur est à l'ombre, le couplage thermique est de - 12W /3 = 4 W/K.

Ainsi, un couplage thermique d'environ 10 W/K entre l'adaptateur-lanceur et le premier radiateur 26 est nécessaire pour atteindre une température de 20 °C +/- 10 °C sur le corps cylindrique 35 de l'adaptateur-lanceur. Une telle valeur peut facilement être obtenue en utilisant des caloducs ou d'autres systèmes de transport de chaleur fluidique. Ce calcul est indicatif - la valeur exacte dépendra de la dimension réelle du corps cylindrique de l'adaptateur-lanceur, et du revêtement thermo-optique installé sur la surface du corps cylindrique de l'adaptateur-ianceur.

Un satellite artificiel 2 selon un quatrième mode de réalisation de l'invention est similaire au satellite artificiel selon le premier mode de réalisation à l'exception du fait que le corps cylindrique 35 de l'adaptateur-lanceur comporte une succession d'orifices 37 destinés à la fixation d'un réservoir 39 contenant un gaz propulsif. La succession d'orifices 37 s'étendent le long d'un cercle contenu dans un plan perpendiculaire à l'axe longitudinal A-A.

Le réservoir 39 est monté à l'intérieur de la partie inférieure du logement créé par le cylindre central 32. Il est fixé à l'adaptateur-lanceur 16 par l'intermédiaire d'une jupe de fixation 60 qui encercle le réservoir. La partie inférieure de la jupe de fixation est pourvue d'une dentelure 62 munie d'orifices 64. Le réservoir 39 est, par exemple, fixé à l'adaptateur-lanceur 16 par des écrous montés dans les orifices 64 de la jupe de fixation et dans les orifices 37 de l'adaptateur-lanceur 16.

Le réservoir 39 contient un gaz ou un liquide propulsif ou propergol, tel que par exemple du xénon ou un gaz contenant du xénon. Du point de vue mécanique, il est avantageux d'installer le réservoir aussi bas que possible dans le satellite : cela permet de réduire la hauteur du centre de gravité et permet ainsi de réduire les efforts au lancement, ce qui permet une structure plus légère et moins chère. L'idéal est de monter le réservoir sur l'adaptateur lanceur.

Avantageusement, le refroidissement de l'adaptateur-lanceur 16 permet de monter le réservoir 39 dans celui-ci.

Cependant, la quantité de propergol qui peut être stockée dans le réservoir 39 est dépendante de la température de ce propergol,

Par exemple, si l'on considère l'exemple d'un réservoir ayant un volume fixe $V_{res}$ et contenant un gaz parfait vérifiant l'équation d'état $pV=nRT$, la quantité de gaz n qui peut être stocké est alors égale à n=pV/RT. Toutefois, la pression est limitée par le volume du réservoir à une pression maximale $p_{max}$ au-dessus de laquelle il y a risque d'explosion. Ainsi, la quantité maximale de gaz qui peut être stockée est donnée par l'équation suivante : $n=p_{max}V_{res}/RT$. Cette quantité est inversement proportionnelle à la température maximale du réservoir. En conséquence, si le réservoir est exposé à des températures élevées, alors la quantité de gaz stockée dans le réservoir doit être réduite de manière à rester inférieure à la pression maximale autorisée $p_{max}$.

Dans cet exemple, lorsque le propergol est un gaz parfait, une réduction de température de 60°C (333K) à 20°C (293K) permet d'accroître la quantité de gaz stockée de 13 %.

Toutefois, les propergols utilisés dans les satellites ne sont généralement pas des gaz parfaits et la réduction de température du propergol permet d'accroître plus considérablement la quantité de gaz stockée. Par exemple, lorsque du xénon est utilisé comme propergol, que le réservoir présente un volume de 1 m$^3$ et que la pression maximale $p_{max}$ est égale à 100 bars. A une température de 80°C, la masse maximale de xénon qui peut être injectée dans le réservoir serait de 900 kg, alors qu'à une température de 20°C, la masse maximale de Xénon qui peut être injectée est de 1850 kg. En conséquence, l'augmentation de la masse de xénon introduite est supérieure à 100 %.

De plus, certains propergols liquides ne sont pas compatibles avec des températures élevées en raison de problèmes de dégradation chimique.

Comme le réservoir 39 est monté à l'intérieur de l'adaptateur-lanceur 16, il existe un couplage thermique important entre ceux-ci de telle sorte que le réservoir tendra à avoir la même température que l'adaptateur-lanceur 16. En effet, même si l'on essaye d'isoler thermiquement le réservoir de l'adaptateur-lanceur, la structure support du réservoir 64 doit être liée rigidement, à l'adaptateur-lanceur et au réservoir, créant ainsi une connexion thermique. Les besoins mécaniques font qu'en pratique il est difficile d'avoir un couplage thermique inférieur à 0.5W/K entre le réservoir et l'adaptateur-lanceur.

En tout cas, l'effet d'un tel isolement est uniquement de ralentir la réponse thermique transitoire du réservoir. Si l'adaptateur-lanceur 16 est chaud pendant plusieurs jours, cet isolement a un effet minime sur le réservoir à l'état stable à une température stabilisée, Pendant certaines phases de la mission, l'adaptateur-lanceur 16 est constamment illuminée par le soleil pendant plusieurs jours, et devient très chaud - généralement 70°C. Dans ces cas, la température du réservoir a tendance à être identique à la température de l'adaptateur-lanceur. Une telle température est trop élevée pour le stockage de gaz propulseur. Il n'est alors pas possible de monter un réservoir directement sur l'adaptateur-lanceur 16.

L'invention permet d'installer un réservoir directement sur le cylindre central 32 de l'adaptateur-lanceur 16. La température maximale du cylindre central 32 de l'adaptateur-lanceur est amenée à un niveau inférieur, et par conséquent la température stabilisée du réservoir est réduite à l'intérieur de limites acceptables pour le stockage de l'agent propulseur. La température du réservoir reste acceptable, même si le couplage thermique entre le réservoir et l'adaptateur-lanceur 16 est augmenté.

Ainsi, le premier équipement de transport de chaleur 42 est également utilisé pour refroidir et contrôler la température du réservoir 39.

Enfin, le premier équipement de transport de chaleur 42 est avantageusement utilisé pour refroidir le réservoir 39, lors de son remplissage. A cet effet, au cours d'une étape 66 visible sur la figure 10, le premier radiateur 26 refroidit le réservoir 39 par l'intermédiaire de l'adaptateur-lanceur 16. Puis, au cours d'une étape 68, le réservoir 39 est rempli de gaz. Au cours de cette étape de remplissage 68, le premier radiateur 26 continue de refroidir le réservoir 39 afin d'augmenter la capacité de remplissage du réservoir 39 ou diminuer le temps de remplissage de celui-ci.

Les étapes 66 et 68 peuvent être répétées à plusieurs fois.

Avantageusement, le refroidissement de la seconde section d'échange thermique 52 permet de refroidir l'adaptateur-lanceur 16 et, par contact, le réservoir 39 fixé sur celui-ci. Le refroidissement du réservoir 39 permet de refroidir le gaz injecté à l'intérieur du réservoir. Ce refroidissement s'oppose au réchauffement naturel du gaz lié à sa compression lors de l'injection.

Comme indiqué plus haut, la température de l'agent de propulsion en vol n'e dépend pas beaucoup de l'accouplement thermique entre le réservoir et l'adaptateur-lanceur. L'installation mécanique du réservoir peut alors être conçue avec un fort couplage thermique de manière à maximiser l'effet de refroidissement lors du remplissage. Comme indiqué plus haut, ce couplage thermique est favorisé si le réservoir est monté directement sur l'interface lanceur ; c'est-à-dire sans pièce intermédiaire.

Ainsi, le remplissage du réservoir 39 est plus sécurisé et peut être réalisé plus rapidement. De plus, le réservoir 39 refroidi permet de stocker une quantité plus importante de gaz pour les raisons mentionnées ci-dessus.

En variante, le profilé est formé d'un bloc avec l'adaptateur-lanceur.

En variante également, le profilé s'étend vers l'intérieur du cylindre de l'adaptateur-lanceur. Dans ce cas, le réservoir n'est pas monté dans l'adaptateur lanceur.

En variante, le radiateur en contact avec le ou les équipements de transport de chaleur 42, 70, 71 est disposé sur la face Sud, la face Est, la face Ouest, la face terre ou la face anti-terre du satellite.

En variante, le mur porte-équipement Nord comporte un unique radiateur qui peut être utilisé à la fois pour le premier 70 et le deuxième 71 équipements de transport de chaleur.

En variante, la première section d'échange thermique est circulaire.

En variante, il peut être envisagé de combiner les différentes possibilités des deux modes d'agencement illustrés sur les figures 6 et 7. Par exemple, en variante du premier agencement, il est possible de disposer les deux caloducs 44, 45, l'un à côté de l'autre, sur et en contact direct avec le profilé 36. De même, il est possible de disposer une bande adhésive 58 sur les deux caloducs 44, 45 empilés et sur la première branche 38 du profilé. Il peut également être envisagé d'agencer les deux caloducs 44, 45 empilés sur le mur porte-équipements terre 12.

En variante, la seconde section d'échange thermique 52 de la conduite 44 est en contact thermique avec le premier radiateur 26 et le troisième radiateur 30.

En variante, le premier équipement 42 de transport de chaleur par fluide est un équipement monophasique ou triphasique.

En variante, l'adaptateur-lanceur peut présenter une forme cylindrique à base carré ou à base rectangulaire ou à base polygonale dont le centre est disposé sur l'axe longitudinal du satellite.

En variante, la structure-support peut présenter différentes formes et notamment une forme tronconique ou une forme en cuvette à facettes avec une cheminée centrale ou être constituée de panneaux assemblés en forme de croix ou même n'être constituée que d'un mur plan porte-équipements qui s'étend perpendiculairement à l'axe longitudinal A-A du satellite.

**Revendications**

1. Satellite artificiel (2) ayant un axe longitudinal (A-A) qui s'étend dans la direction de lancement, ledit satellite artificiel (2) comportant :

   - une structure-support (14) portant des murs porte-équipements (4, 8, 6, 10, 12),
   - un adaptateur-lanceur (16) solidaire de la structure-support (14),
   - un premier radiateur (26),
   - au moins un premier équipement de transport de chaleur (42) par fluide comportant au moins une première section d'échange thermique (50) et une seconde section d'échange thermique (52), ladite seconde section d'échange thermique (52) étant en contact thermique avec ledit premier radiateur (26),

   **caractérisé en ce que** ladite première section d'échange thermique (50) est en contact thermique avec au moins une partie de l'adaptateur-lanceur (16) de sorte à permettre des échanges thermiques entre l'adaptateur-lanceur (16) et le premier radiateur (26).

2. Satellite artificiel (2) selon la revendication 1, qui comporte un profilé (36) solidaire de l'adaptateur-lanceur (16), ledit profilé (36) s'étendant dans un plan perpendiculaire à l'axe longitudinal (A-A) du satellite, et dans lequel ledit profilé (36) porte et est en contact thermique direct avec au moins une partie de la première section d'échange thermique (50).

3. Satellite artificiel (2) selon la revendication 2, dans lequel un mur porte-équipements, dit mur porte-équipements anti-terre (12), est fixé à l'adaptateur-lanceur (16) par l'intermédiaire dudit profilé (36).

4. Satellite artificiel (2) selon la revendication 1, dans lequel au moins une partie de la première section d'échange thermique (50) est en contact thermique direct avec un mur porte-équipements, dit mur porte-équipements anti-terre (12) ; ledit mur porte-équipements anti-terre (12) étant fixé à l'adaptateur-lanceur (16).

5. Satellite artificiel (2) selon la revendication 4, qui comporte un profilé (36) solidaire de l'adaptateur-lanceur (16), ledit profilé (36) s'étendant dans un plan perpendiculaire à l'axe longitudinal (A-A) du satellite (2).

6. Satellite artificiel (2) selon l'une quelconque des revendications 1 à 5, dans lequel ladite première section d'échange thermique (50) comprend plusieurs tronçons (54) fixés les uns aux autres de manière à former un demi - polygone ou un polygone (56).

7. Satellite artificiel (2) selon l'une quelconque des revendications 1 à 5, dans lequel ladite première section d'échange thermique (50) présente la forme d'un demi-cercle (86, 87) ou la forme d'un cercle.

8. Satellite artificiel (2) selon l'une quelconque des revendications 1 à 7, dans lequel le premier équipement de transport de chaleur (42) comprend une conduite principale (80, 81) en forme d'oméga et au moins une conduite auxiliaire (82, 83, 84, 85) en forme de L ; au moins une partie de la conduite principale (80, 81) formant ladite première section d'échange thermique (50), au moins une partie de la conduite auxiliaire (82, 83, 84, 85) formant ladite seconde section d'échange thermique (52).

9. Satellite artificiel (2) selon l'une quelconque des revendications 1 à 8, qui comporte un réservoir (39) de gaz propulsif et dans lequel l'adaptateur-lanceur (16) est un corps cylindrique (35) ; ledit réservoir (39) de gaz propulsif étant agencé à l'intérieur dudit corps cylindrique (35) ; ledit réservoir (39) étant en contact thermique avec l'adaptateur-lanceur (16).

10. Satellite artificiel (2) selon la revendication 9, dans lequel le réservoir (39) est monté directement sur l'adaptateur-lanceur (16).

11. Satellite artificiel (2) selon l'une quelconque des revendications 1 à 10, qui comporte au moins un deuxième équipement de transport de chaleur (70, 71) par fluide; ledit deuxième équipement de transport de chaleur (70, 71) comprenant une première section (74) et une deuxième section (76) ; ladite deuxième section (76) étant en contact thermique avec ledit premier radiateur (26) et ladite première section (74) étant en contact thermique avec un ensemble d'accumulateurs électriques (24).

12. Satellite artificiel (2) selon l'une quelconque des revendications 2, 3, 5 à 11, qui comporte une bande adhésive (58) réalisée dans un matériau thermiquement conducteur ; ladite bande adhésive (58) étant solidarisée, d'une part, à la première section d'échange thermique (50) et, d'autre part, à au moins une partie dudit profilé (36).

13. Satellite artificiel (2) selon l'une quelconque des revendications 1 à 12, dans lequel la première section d'échange thermique (50) comprend au moins deux caloducs (44, 45) disposés, l'un à côté de l'autre, le long d'une direction perpendiculaire à l'axe longitudinal (A-A) du satellite.

14. Satellite artificiel (2) selon l'une quelconque des revendications 1 à 12, dans lequel la première section d'échange thermique (50) comprend au moins deux caloducs (44, 45) disposés l'un à côté de l'autre, le long d'une direction parallèle à l'axe longitudinal (A-A) du satellite.

15. Satellite artificiel (2) selon l'une quelconque des revendications 1 à 14, dans lequel le premier équipement de transfert de chaleur (42) comporte au moins une chaufferette (46) en contact thermique avec la seconde section d'échange thermique (52), et une unité de commande (48) propre à commander l'allumage de ladite au moins une chaufferette (46).

16. Procédé de remplissage d'un réservoir (39) d'un satellite artificiel (2) selon la revendication 1 ; **caractérisé en ce qu'**il comporte les étapes suivantes :

  - refroidissement (66) du réservoir (39) par le premier radiateur (26) ; et
  - remplissage (68) du réservoir (39) par du propergol.

**Patentansprüche**

1. Künstlicher Satellit (2) mit einer Längsachse (A-A), die sich in die Startrichtung erstreckt, wobei der künstliche Satellit (2) aufweist:

  - eine Trägerstruktur (14), die Ausstattungsteile-Trägerwände (4, 8, 6, 10, 12) trägt,
  - einen mit der Trägerstruktur (14) fest verbundenen Startrakete-Adapter (16),
  - einen ersten Radiator (26),
  - mindestens eine erste Wärmetransporteinrichtung (42) auf Fluidbasis, die mindestens eine erste Wärmeaustauschzone (50) und eine zweite Wärmeaustauschzone (52) aufweist, wobei die zweite Wärmeaustauschzone (52) in thermischem Kontakt mit dem ersten Radiator (26) ist,

  **dadurch gekennzeichnet, dass** die erste Wärmeaustauschzone (50) in thermischem Kontakt mit mindestens einem Teil des Startrakete-Adapters (16) ist, derart, um thermische Austauschvorgänge zwischen dem Startrakete-Adapter (16) und dem ersten Radiator (26) zu erlauben.

2. Künstlicher Satellit (2) nach Anspruch 1, der ein mit dem Startrakete-Adapter (16) fest verbundenes Profil (36) aufweist, wobei das Profil (36) sich in einer Ebene erstreckt, die senkrecht zur Längsachse (A-A) des Satelliten ist, und wobei das Profil (36) mindestens einen Teil der ersten Wärmeaustauschzone (50) trägt und mit diesem Teil in direktem thermischem Kontakt ist.

3. Künstlicher Satellit (2) nach Anspruch 2, in welchem eine Ausstattungsteile-Trägerwand, die sogenannte Anti-Erde-Ausstattungsteile-Trägerwand (12), über das Profil (36) an dem Startrakete-Adapter (16) befestigt ist.

4. Künstlicher Satellit (2) nach Anspruch 1, in welchem mindestens ein Teil der ersten Wärmeaustauschzone (50) in direktem thermischem Kontakt mit einer Ausstattungsteile-Trägerwand, der sogenannten Anti-Erde-Ausstattungsteile-Trägerwand (12), ist; wobei die Anti-Erde-Ausstattungsteile-Trägerwand (12) an dem Startrakete-Adapter (16) befestigt ist.

5. Künstlicher Satellit (2) nach Anspruch 4, der ein mit dem Startrakete-Adapter (16) fest verbundenes Profil (36) aufweist, wobei das Profil (36) sich in einer Ebene erstreckt, die senkrecht zur Längsachse (A-A) des Satelliten (2) ist.

6. Künstlicher Satellit (2) nach einem der Ansprüche 1 bis 5, in welchem die erste Wärmeaustauschzone (50) mehrere Abschnitte (54) aufweist, die derart miteinander verbunden sind, um ein Halbpolygon oder ein Polygon (56) zu bilden.

7. Künstlicher Satellit (2) nach einem der Ansprüche 1 bis 5, in welchem die erste Wärmeaustauschzone (50) die Form eines Halbkreises (86, 87) oder die Form eines Kreises hat.

8. Künstlicher Satellit (2) nach einem der Ansprüche 1 bis 7, in welchem die erste Wärmetransporteinrichtung (42) eine Omega-förmige Hauptleitung (80, 81) und mindestens eine L-förmige Hilfsleitung (82, 83, 84, 85) aufweist; wobei mindestens ein Teil der Hauptleitung (80, 81) die erste Wärmeaustauschzone (50) bildet und mindestens ein Teil der Hilfsleitung (82, 83, 84, 85) die zweite Wärmeaustauschzone (52) bildet.

9. Künstlicher Satellit (2) nach einem der Ansprüche 1 bis 8, der einen Tank (39) für ein Treibgas aufweist und in welchem der Startrakete-Adapter (16) ein zylindrischer Körper (35) ist; wobei der Treibgastank (39) im Innern des zylindrischen Körpers (35) angeordnet ist; und der Tank (39) in thermischem Kontakt mit dem Startrakete-Adapter (16) ist.

10. Künstlicher Satellit (2) nach Anspruch 9, in welchem der Tank (39) direkt an dem Startrakete-Adapter (16) angebracht ist.

11. Künstlicher Satellit (2) nach einem der Ansprüche 1 bis 10, der mindestens eine zweite Wärmetransporteinrichtung (70, 71) auf Fluidbasis aufweist; wobei die zweite Wärmetransporteinrichtung (70, 71) eine erste Zone (74) und eine zweite Zone (76) aufweist; wobei die zweite Zone (76) in thermischem Kontakt mit dem ersten Radiator (26) ist und die erste Zone (74) in thermischem Kontakt mit einer Anordnung von elektrischen Akkumulatoren (24) ist.

12. Künstlicher Satellit (2) nach einem der Ansprüche 2, 3, 5 bis 11, der ein Klebeband (58) aufweist, das aus einem thermisch leitenden Material hergestellt ist; wobei das Klebeband (58) einerseits mit der ersten Wärmeaustauschzone (50) und andererseits mit mindestens einem Teil des Profils (36) fest verbunden ist.

13. Künstlicher Satellit (2) nach einem der Ansprüche 1 bis 12, in welchem die erste Wärmeaustauschzone (50) mindestens zwei Wärmerohre (44, 45) aufweist, die seitlich nebeneinander entlang einer Richtung, die senkrecht zur Längsachse (A-A) des Satelliten ist, angeordnet sind.

14. Künstlicher Satellit (2) nach einem der Ansprüche 1 bis 12, in welchem die erste Wärmeaustauschzone (50) mindestens zwei Wärmerohre (44, 45) aufweist, die seitlich nebeneinander entlang einer Richtung, die parallel zur Längsachse (A-A) des Satelliten ist, angeordnet sind.

15. Künstlicher Satellit (2) nach einem der Ansprüche 1 bis 14, in welchem die erste Wärmetransporteinrichtung (42) mindestens eine Heizeinrichtung (46) in thermischem Kontakt mit der zweiten Wärmeaustauschzone (52) und eine Steuereinheit (48) geeignet zur Steuerung der Zündung der mindestens einen Heizeinrichtung (46) aufweist.

16. Verfahren zum Füllen eines Tanks (39) eines künstlichen Satelliten (2) nach Anspruch 1; **dadurch gekennzeichnet, dass** es die folgenden Schritte aufweist:

   - Kühlen (66) des Tanks (39) mit Hilfe des ersten Radiators (26); und
   - Füllen (68) des Tanks (39) mit Propergol.

**Claims**

1. Artificial satellite (2) having a longitudinal axis (A-A) that extends in the launch direction, said artificial satellite (2) comprising:

   - a mounting structure (14) supporting equipment-bearing walls (4, 8, 6, 10, 12),
   - a launcher-adapter (16) rigidly connected to the mounting structure (14),
   - a first radiator (26),
   - at least one first system (42) for transporting heat by a fluid comprising at least one first heat-exchange section (50) and a second heat-exchange section (52), said second heat-exchange section (52) being in thermal contact with said first radiator (26),

**characterised in that** said first heat-exchange section (50) is in thermal contact with at least one portion of the launcher-adapter (16) in such a way as to allow for heat exchanges between the launcher-adapter (16) and the first radiator (26).

2.   Artificial satellite (2) according to claim 1, that comprises a profile (36) rigidly connected to the launcher-adapter (16), said profile (36) extending in a plane perpendicular to the longitudinal axis (A-A) of the satellite, and wherein said profile (36) supports and is in thermal contact direct with at least one portion of the first heat-exchange section (50).

3.   Artificial satellite (2) according to claim 2, wherein an equipment-bearing wall, referred to as anti-Earth equipment-bearing wall (12), is fastened to the launcher-adapter (16) by the intermediary of said profile (36).

4.   Artificial satellite (2) according to claim 1, wherein at least one portion of the first heat-exchange section (50) is in thermal contact direct with an equipment-bearing wall, referred to as anti-Earth equipment-bearing wall (12); said anti-Earth equipment-bearing wall (12) being fastened to the launcher-adapter (16).

5.   Artificial satellite (2) according to claim 4, that comprises a profile (36) rigidly connected to the launcher-adapter (16), said profile (36) extending in a plane perpendicular to the longitudinal axis (A-A) of the satellite (2).

6.   Artificial satellite (2) according to any of claims 1 to 5, wherein said first heat-exchange section (50) comprises several sections (54) fastened to one another in such a way as to form a half-polygon or a polygon (56).

7.   Artificial satellite (2) according to any of claims 1 to 5, wherein said first heat-exchange section (50) has the shape of a half-circle (86, 87) or the shape of a circle.

8.   Artificial satellite (2) according to any of claims 1 to 7, wherein the first system for transporting heat (42) comprises a main duct (80, 81) in the shape of an omega and at least one auxiliary duct (82, 83, 84, 85) in the shape of an L; at least one portion of the main duct (80, 81) forming said first heat-exchange section (50), at least one portion of the auxiliary duct (82, 83, 84, 85) forming said second heat-exchange section (52).

9.   Artificial satellite (2) according to any of claims 1 to 8, which comprises a tank (39) of propellant gas and wherein the launcher-adapter (16) is a cylindrical body (35); said tank (39) of propellant gas being arranged inside said cylindrical body (35); said tank (39) being in thermal contact with the launcher-adapter (16).

10.  Artificial satellite (2) according to claim 9, wherein the tank (39) is mounted directly on the launcher-adapter (16).

11.  Artificial satellite (2) according to any of claims 1 to 10, qui comprises at least one second system for transporting heat (70, 71) by a fluid; said second system for transporting heat (70, 71) comprising a first section (74) and a second section (76); said second section (76) being in thermal contact with said first radiator (26) and said first section (74) being in thermal contact with a set of electrical accumulators (24).

12.  Artificial satellite (2) according to any of claims 2, 3, 5 to 11, that comprises an adhesive strap (58) made from a thermally-conductive material; said adhesive strap (58) being rigidly connected, on the one hand, to the first heat-exchange section (50) and, on the other hand, to at least one portion of said profile (36).

13.  Artificial satellite (2) according to any of claims 1 to 12, wherein the first heat-exchange section (50) comprises at least two heat pipes (44, 45) arranged, one next to the other, along a direction perpendicular to the longitudinal axis (A-A) of the satellite.

14.  Artificial satellite (2) according to any of claims 1 to 12, wherein the first heat-exchange section (50) comprises at least two heat pipes (44, 45) arranged one next to the other, along a direction parallel to the longitudinal axis (A-A) of the satellite.

15.  Artificial satellite (2) according to any of claims 1 to 14, wherein the first system for transferring heat (42) comprises at least one heater (46) in thermal contact with the second heat-exchange section (52), and a control unit (48) able to control the turning on of said at least one heater (46).

16. Method of filling a tank (39) of an artificial satellite (2) according to claim 1; **characterised in that** it comprises the following steps:

   - cooling (66) of the tank (39) by the first radiator (26); and
   - filling (68) of the tank (39) with propellant.

FIG. 1

FIG. 2

FIG. 3

FIG. 10

EP 3 212 503 B1

FIG. 4

FIG. 5

EP 3 212 503 B1

FIG. 6

FIG. 7

FIG. 12

FIG. 8

EP 3 212 503 B1

FIG. 9

FIG. 11

**EP 3 212 503 B1**

## RÉFÉRENCES CITÉES DANS LA DESCRIPTION

**Documents brevets cités dans la description**

- US 5310141 A